# EUROPEAN PATENT APPLICATION

(11) **EP 4 818 600 A1**
(43) Date of publication of application: **07.10.2026**
(21) Application number: 24896738.2
(22) Date of filing: 29.11.2024
(51) Int. Cl.: F25B 41/35, F16K 1/36, F16K 31/50, F16K 39/02

(54) **ELECTRONIC EXPANSION VALVE**

(30) Priority: 30.11.2023 CN 202311636847; 30.11.2023 CN 202323267740 U; 30.11.2023 CN 202323265027 U; 30.11.2023 CN 202323281183 U; 30.11.2023 CN 202323266313 U
(71) Applicant: Zhejiang Dunan Artificial Environment Co., Ltd., Shaoxing, Zhejiang 311835 (CN)
(72) Inventor: YU, Zhou, Shaoxing, Zhejiang 311835 (CN); WANG, Weijia, Shaoxing, Zhejiang 311835 (CN)
(74) Representative: Meyer-Dulheuer MD Legal Patentanwälte PartG mbB
(86) International application number: PCT/CN2024/135754
(87) International publication number: WO 2025/113658

(57) **Abstract**

An electronic expansion valve (100). The electronic expansion valve (100) includes a fixed seat assembly (10), a transmission assembly (20), and a valve core assembly (30). The fixed seat assembly (10) has a valve cavity (11) and a valve port (12). The transmission assembly (20) comprises a screw rod (21) and a nut (22), and the screw rod (21) is configured to rotate in the circumferential direction. The nut (22) is in threaded connection with the screw rod (21), and is restricted by the fixed seat assembly (10) and fits with the fixed seat assembly (10) along the circumference thereof. The valve core assembly (30) is located inside the valve cavity (11). The valve core assembly (30) includes a main core body (31) and an elastic member (33). The main core body (31) is provided with an accommodating slot (311). The elastic member (33) is disposed in the accommodating slot (311), and the nut (22) extends into the accommodating slot (311) and is pressed against the elastic member (33).

## Description

### CROSS-REFERENCE TO RELATED APPLICATIONS

This application claims priority to Chinese patent application No. 202311636847.4, filed on November 30, 2023, and titled "Electronic expansion valve"; Chinese patent application No. 202323267740.5, filed on November 30, 2023, and titled "restricting structure for Electronic expansion valve and electronic expansion valve"; Chinese patent application No. 202323265027.7, filed on November 30, 2023, and titled "Electronic expansion valve"; Chinese patent application No. 202323281183.2, filed on November 30, 2023, and titled "Electronic expansion valve"; and Chinese patent application No. 202323266313.5, filed on November 30, 2023, and titled "mounting structure and Electronic expansion valve". The contents of the above identified applications are hereby incorporated herein in their entireties by reference.

### TECHNICAL FIELD

The present application relates to the field of valves, and in particular, to electronic expansion valves.

### BACKGROUND

The electronic expansion valve is disposed in an air conditioning system and used for cutting off or communicating a flow of a refrigerant. An electronic expansion valve generally includes a valve seat assembly, a valve core, a screw rod and a nut. The valve seat assembly includes a valve cavity, and one end of the valve cavity is provided with a valve port. A motor drives the screw rod to rotate. The nut is sleeved on an outer side of the screw rod and in threaded engagement with the screw rod, so as to convert rotation of the screw rod into axial movement of the screw rod. The valve core is connected to the nut, such that the nut drives the valve core to move towards the valve port to close the valve port or the nut drives the valve core to move away from the valve port to open the valve port.

However, when the valve core blocks the valve port, the refrigerant may flow out from the valve port when the valve is closed due to untight blocking.

### SUMMARY

The embodiments of the present application provides an electronic expansion valve.

The present application provides an electronic expansion valve. The electronic expansion valve includes a fixed seat assembly, a transmission assembly and a transmission assembly. The fixed seat assembly includes a valve cavity and a valve port. The transmission assembly includes a screw rod and a nut, wherein the screw rod is restricted by the fixed seat assembly and fits with the fixed seat assembly along an axis of the screw rod, the screw rod is configured to rotate along the axis of the screw rod; and the nut is sleeved around the screw rod, the nut is in threaded connection with the screw rod, and an outer surface of the nut is restricted by the fixed seat assembly and fits with the fixed seat assembly along a circumference of the nut. The valve core assembly is disposed in the valve cavity. The valve core assembly includes a main core body and an elastic member, the main core body is provided with an accommodating slot, the elastic member is disposed in the accommodating slot, and the nut extends into the accommodating slot and is pressed against the elastic member. The nut is configured to compress the elastic member to push the main core body toward the valve port, causing the main core body to seal the valve port.

In an embodiment, the valve core assembly further includes a pressing block, an opening of the accommodating slot is provided at a side of the accommodating slot away from the valve port, the pressing block is located in the accommodating slot, and the pressing block is fixed to the opening of the accommodating slot; and the nut includes a restricting protrusion, the restricting protrusion is provided at an end of the nut adjacent to the valve port, an end of the restricting protrusion is configured to press against the elastic member, and another end of the restricting protrusion is configured to abut against the pressing block.

In an embodiment, the valve core assembly further includes a transmission block, the transmission block is restricted between the restricting protrusion and the elastic member.

In an embodiment, the accommodating slot includes a stopping surface, the stopping surface is provided away from the valve port, the elastic member is located at a side of the stopping surface adjacent to the valve port, at least a part of the elastic member extends out from the stopping surface, and an assembling gap is defined between the transmission block and the stopping surface.

In an embodiment, the fixed seat assembly includes a connection sleeve and a guide sleeve, the guide sleeve is sleeved outside the connection sleeve and is connected to the guide sleeve by welding, the guide sleeve is provided adjacent to the valve port relative to the connection sleeve, the screw rod is restricted by an inner surface of the connection sleeve and fits with the inner surface of the connection sleeve along the axis of the screw rod, and the outer surface of the nut is restricted by the inner surface of the connection sleeve and fits with the inner surface of the connection sleeve along the circumference of the nut.

In an embodiment, an inner surface of the guide sleeve includes a restricting surface, when the main core body moves towards a direction away from the valve port, the restricting surface is configured to restrict the main core body; and the main core body is provided with a restricting collar, the restricting collar is provided adjacent to the restricting surface, the restricting collar is configured to abut against the restricting surface, a thickness of the restricting collar is defined as h, and the thickness h of the restricting collar is smaller than or equal to 1.5 mm.

In an embodiment, the fixed seat assembly includes a connection sleeve and a guide sleeve, the connection sleeve and the guide sleeve are sleeved together and connected with each other, and the valve cavity is provided in the guide sleeve; the connection sleeve includes a first wall, the first wall is in contact with the guide sleeve, and a welding seam is defined between the first wall and the guide sleeve; at an end of the first wall away from the valve port, a welding groove is defined between the connection sleeve and the guide sleeve, and the welding groove is in communication with the welding seam; and at an end of the first wall adjacent to the valve port, a second channel is defined between the connection sleeve and the guide sleeve, and the second channel is configured to communicate the valve cavity with the welding seam.

In an embodiment, the fixed seat assembly further include a valve seat and an inlet pipe, the valve seat is sleeved outside the guide sleeve, the valve cavity is enclosed between the valve seat and the guide sleeve, and the inlet pipe inserts in a sidewall of the valve seat and is in communication with the valve cavity; the guide sleeve include a guiding section and a connecting section, the guiding section is provided adjacent to the connection sleeve relative to the connecting section, the guiding section is in clearance fit with an inner surface of the valve seat, along a direction from the connection sleeve to the valve cavity, an outer size of the guiding section increases, and the connecting section is in interference fit with the inner surface of the valve seat, wherein the inlet pipe, the valve seat, the connection sleeve and the guide sleeve are integrally connected together by furnace welding.

In an embodiment, the transmission assembly further includes a rotor and a connecting plate, the connecting plate is fixed to the rotor, the connecting plate is provided with a mounting hole, the screw rod extends in the mounting hole, and the screw rod is in interference fit with an inner surface of the mounting hole; and the rotor is configured to drive the screw rod to rotate via the connecting plate.

In an embodiment, an outer surface of the main core body is in sealing fit with an inner surface of the valve cavity, and the outer surface of the main core body is movable relative to the inner surface of the valve cavity, the main core body is configured to separate the valve cavity into an upper cavity and a lower cavity, the lower cavity is configured to communicate the inlet pipe and the valve port, the main core body includes an upper end surface and a lower end surface, the upper end surface faces the upper cavity, and the lower end surface faces the valve port, and the main core body includes a first channel extending through the upper end surface and the lower end surface; and the lower end surface is configured to block the valve port, and when the lower end surface blocks the valve port, the valve port is in communication with the upper cavity via the first channel

In an embodiment, an annular-shaped mounting site is provided in the first channel, an end of the transmission assembly is provided with a restricting protrusion, the restricting protrusion is disposed in the annular-shaped mounting site, two ends of the restricting protrusion abuts against two opposite sidewalls of the annular-shaped mounting site along an axis of the restricting protrusion, respectively, a connection channel is defined between an outer surface of the restricting protrusion and an inner surface of the annular-shaped mounting site, and the connection channel is in communication with the first channel.

In an embodiment, the outer surface of the restricting protrusion is provided with a notch, the notch extends through the two ends of the restricting protrusion along the axis of the restricting protrusion, and the connection channel is enclosed between the notch and the inner surface of the annular-shaped mounting site; and the notch and an upper edge of the annular-shaped mounting site are staggered along a radial direction of the annular-shaped mounting site, the notch and a lower edge of the annular-shaped mounting site are staggered along a radial direction of the annular-shaped mounting site, so that the connection channel is in communication with the first channel.

In an embodiment, the electronic expansion valve further includes a pressing block and a transmission block, wherein the pressing block and the transmission block are connected to an inner surface of the first channel, respectively, the pressing block and the transmission block are spaced from each other along the axis of the first channel, so that the transmission block, the inner surface of the first channel and the pressing block enclose to form the annular-shaped mounting site; and the pressing block is provided adjacent to the upper end surface, a flow gap is defined between an inner surface of the pressing block and an outer surface of the transmission assembly, and the lower end surface is in fluid communication with the upper end surface via the first channel, the connection channel and the flow gap.

In an embodiment, the electronic expansion valve further includes an outer housing. The outer housing is covered on a side of the fixed seat assembly away from the valve port, a rotor cavity is enclosed between the outer housing and the fixed seat assembly, a sidewall of the fixed seat assembly is provided with a through hole, and the through hole is configured to communicate the upper cavity with the rotor cavity.

In an embodiment, the fixed seat assembly includes a connection sleeve and a guide sleeve, the connection sleeve is configured to dispose the transmission assembly, the valve cavity is provided in the guide sleeve, and the through hole is provided on the guide sleeve; and the connection sleeve includes a first wall and a second wall, the first wall is connected to the guide sleeve by welding, and the second channel is spaced from the guide sleeve, a second channel is defined and located between the second wall and the guide sleeve, and the second channel is configured to communicate the upper cavity with the through hole.

In an embodiment, an outer surface of the nut includes an arc-shaped surface and a protrusion portion, the protrusion portion protrudes from the arc-shaped surface along a radial direction of the arc-shaped surface; the fixed seat assembly includes a mounting channel, an inner surface of the mounting channel includes a centering surface and a restricting surface, the centering surface is in contact with the arc-shaped surface, and the restricting surface is in contact with the protrusion portion; and the nut is configured to move relative to the fixed seat assembly along an axis of the nut, and the restricting surface is configured to fit with the protrusion portion, so as to restrict rotation of the nut along a circumference of the nut.

In an embodiment, a shape of the inner surface of the mounting channel is the same as a shape of the outer surface of the nut, and the outer surface of the nut is in contact with the inner surface of the mounting channel.

In an embodiment, the outer surface of the nut includes a plurality of protrusion portions, the plurality of protrusion portions are spaced from each other along a circumference of the nut.

In an embodiment, the protrusion portion is configured as strip-shaped, and the protrusion portion extends along the axis of the nut; and along a direction from the axis of the nut to the arc-shaped surface, a width of a cross-section of the protrusion portion decreases.

In an embodiment, the connection sleeve includes a restricting section and an accommodating section, an inner diameter of the restricting section is smaller than an inner diameter of the accommodating section, the outer surface of the nut is in contact with an inner surface of the restricting section, the nut is configured to slide along the inner surface of the restricting section, and an outer surface of the nut is spaced from an inner surface of the accommodating section; and the restricting section is provided with a recessed portion, the recessed portion is provided at an end of the restricting section along an axis of the restricting section, and the recessed portion is configured to flare outwardly relative to the axis of the restricting section.

In an embodiment, the electronic expansion valve further includes a bearing, wherein the fixed seat assembly is provided with an assembling hole, the bearing is disposed in the assembling hole, and the screw rod extends through the bearing; and an inner ring of the bearing is in clearance fit with the screw rod; optionally, an outer ring of the bearing is clearance fit with an inner surface of the assembling hole; optionally, the inner ring of the bearing is in clearance fit with the screw rod, and the outer ring of the bearing is clearance fit with the inner surface of the assembling hole.

In an embodiment, a first restricting step and a second restricting step are defined on an outer surface of the screw rod, the first restricting step and the second restricting step are spaced from each other along the axis of the screw rod, the first restricting step is configured to restrict an end of the bearing, the second restricting step is configured to restrict another end of the bearing, and at least one of the first restricting step and the second restricting step is detachably connected to the screw rod.

In an embodiment, the electronic expansion valve further includes an elastic supporting member, wherein an end of the elastic supporting member is connected to the first restricting step, and another end of the elastic supporting member is connected to a side of the bearing away from the second restricting step.

In an embodiment, a mounting groove is defined in the assembling hole, the bearing is disposed in the mounting groove, an end of the bearing along an axis of the bearing abuts against a side of the mounting groove, and another end of the bearing along the axis of the bearing abuts against another side of the mounting groove.

In an embodiment, the screw rod is fixed to the inner ring of the bearing, and the outer ring of the bearing is in clearance fit with the inner surface of the assembling hole.

In an embodiment, the electronic expansion valve further includes a restricting collar and a snap ring, wherein an outer surface of the screw rod is provided with a mating groove, the restricting collar is sleeved outside the screw rod, the restricting collar is provided with an assembling groove corresponding to the mating groove, the assembling groove includes a groove opening, an assembling gap is formed between the groove opening and the screw rod, at least a part of the snap ring is accommodated in the mating groove, and another part of the snap ring is accommodated in the assembling groove; and when an end of the restricting collar away from the assembling groove suffers from a force from the axis of the screw rod to the groove opening, an inner surface of the assembling groove cooperates with an inner surface of the mating groove to snap the snap ring; and a width of the assembling gap is defined as L, and a size of the snap ring is defined as D, and the size D of the snap ring is greater than the width L of the assembling gap.

In an embodiment, an outer surface of the screw rod is provided with a guiding inclined surface, the guiding inclined surface is provided at a side of the mating groove, and along a direction from the guiding inclined surface to the mating groove, a distance between the guiding inclined surface and the axis of the screw rod increases.

In an embodiment, the assembling groove is provided with an abutting inclined surface, the abutting inclined surface is configured to abut against the snap ring; and the abutting inclined surface faces the groove opening, and along a direction from a bottom of the assembling groove to the groove opening, a distance between the abutting inclined surface and an axis of the restricting collar increases.

Details of one or more embodiments of the present application are presented in the following accompanying drawings and description in order to make other features, purposes and advantages of the present application more concise and understandable.

### BRIEF DESCRIPTION OF THE DRAWINGS

In order to better describe and illustrate the embodiments and/or examples of the present application disclosed herein, reference may be made to one or more of the accompanying drawings. The additional details or examples used to describe the accompanying drawings should not be considered a limitation on the scope of any of the disclosed applications, the embodiments and/or examples currently described, and the best mode of these applications as currently understood.
FIG. 1 is a sectional view of an electronic expansion valve in one or some embodiments when the valve port is open.
FIG. 2 is a partially enlarged view of A portion in FIG. 1.
FIG. 3 is a sectional view of an electronic expansion valve in one or some embodiments when the valve port is close.
FIG. 4 is a partial enlarged view of b portion in FIG. 3.
FIG. 5 is a partial enlarged view of C portion in FIG. 3.
FIG. 6 is a sectional view of a main core body in one or some embodiments.
FIG. 7 is another sectional view of an electronic expansion valve in one or some embodiments when the valve port is open.
FIG. 8 is a partial enlarged view of D portion in FIG. 7.
FIG. 9 is an isometric view of a nut in one or some embodiments.
FIG. 10 is an isometric view of a guide sleeve in one or some embodiments.
FIG. 11 is another sectional view of an electronic expansion valve in one or some embodiments when the valve port is open.
FIG. 12 is a sectional view of a connection sleeve in one or some embodiments.
FIG. 13 is a sectional view of a nut in one or some embodiments, in which the nut is disposed in the mounting channel.
FIG. 14 is a schematic diagram showing assembly of a screw rod, a bearing and an elastic supporting member in one or some embodiments.
FIG. 15 is a partial enlarged view of E portion in FIG. 14.

100 represents an electronic expansion valve; 10 represents a fixed seat assembly; 11 represents a valve cavity; 111 represents an upper cavity; 112 represents a lower cavity; 12 represents a valve port; 13 represents a restricting surface; 15 represents an assembling gap; 16 represents a connection sleeve; 160 represents a mounting channel; 160a represents a centering surface; 160b represents a restricting surface; 161a represents a first wall; 161b represents a second wall; 162 represents a welding groove; 163 represents a second channel; 164 represents a welding seam; 165 represents an accommodating section; 166 represents a restricting section; 166a represents a recessed portion; 17 represents a guide sleeve; 171 represents a guiding section; 172 represents a connecting section; 173 represents a through hole; 18 represents a valve seat; 19 represents an assembling hole; 191 represents a mounting groove; 192 represents a first section; 193 represents a second section; 194 represents a stopping step; 20 represents a transmission assembly; 21 represents a screw rod; 212 represents a mating groove; 213 represents a first restricting step; 214 represents a second restricting step; 215 represents a guiding inclined surface; 216 represents a restricting step; 22 represents a nut; 201 represents a notch; 221 represents a restricting protrusion; 222 represents a protrusion portion; 223 represents an arc-shaped surface; 23 represents a rotor; 24 represents a connecting plate; 241 represents a mounting hole; 25 represents a snap ring; 26 represents a restricting collar; 261 represents an assembling groove; 261a represents a groove opening; 261b represents an abutting inclined surface; 262 represents an assembling gap; 27 represents an elastic supporting member; 28 represents a lead-in section; 29 represents an assembling section; 208 represents a mounting seat; 30 represents a valve core assembly; 31 represents a main core body; 301 represents a first channel; 311 represents an accommodating slot; 311a represents a first groove section; 311b represents a second groove section; 311c represents a stopping surface; 311d represents an opening; 302 represents an annular-shaped mounting site; 312 represents a third channel; 303 represents a connection channel; 32 represents a pressing block; 321 represents a small-diameter section; 322 represents a large-diameter section; 33 represents an elastic member; 34 represents a transmission block; 341 represents an abutting section; 342 represents a connecting section; 35 represents a restricting collar; 36 represents an upper end surface; 37 represents a lower end surface; 38 represents a flow gap; 40 represents an inlet pipe; 401 represents a bearing; 50 represents an outlet pipe; 60 represents an outer housing; and 70 represents a rotor cavity.

### DETAILED DESCRIPTION

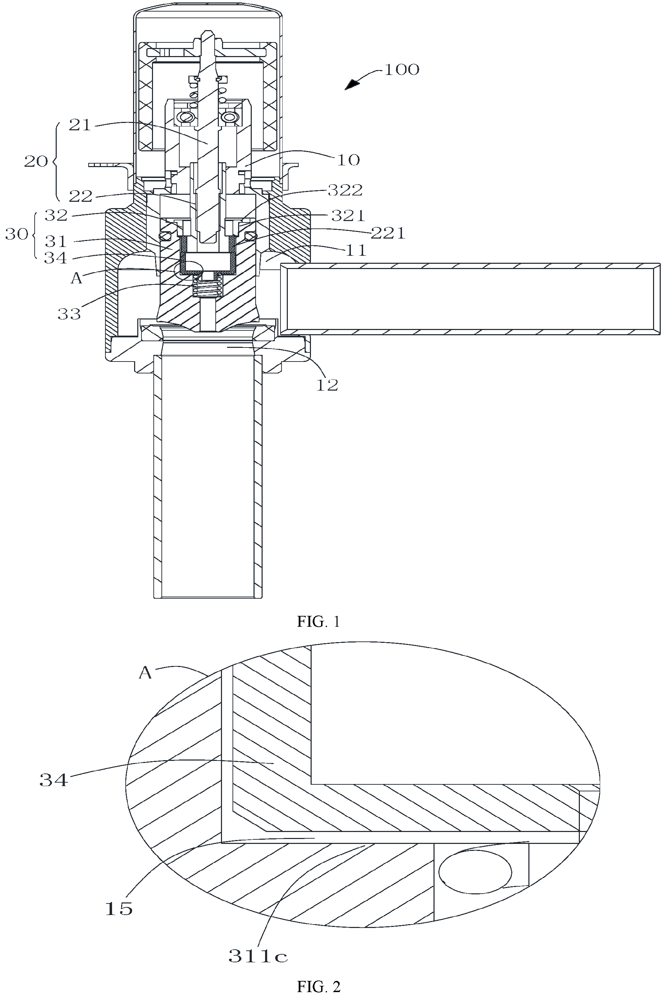

Referring to FIG. 1 and FIG. 2, the present application provides an electronic expansion valve 100. The electronic expansion valve 100 includes a fixed seat assembly 10, a transmission assembly 20 and a valve core assembly 30. The fixed seat assembly 10 includes a valve cavity 11 and a valve port 12 in communication with the valve cavity 11. The transmission assembly 20 includes a screw rod 21 and a nut 22, wherein the screw rod 21 is restricted by the fixed seat assembly 10 and fits with the fixed seat assembly 10 along an axis of the screw rod 21, the screw rod 21 is configured to rotate along the axis of the screw rod 21. The nut 22 is sleeved around the screw rod 21, the nut 22 is in threaded connection with the screw rod 21, and an outer surface of the nut 22 is restricted by the fixed seat assembly 10 and fits with the fixed seat assembly 10 along a circumference of the nut 22. The valve core assembly 30 is disposed in the valve cavity 11. The valve core assembly 30 includes a main core body 31 and an elastic member 33. The main core body 31 is provided with an accommodating slot 311, the elastic member is disposed in the accommodating slot 311, and a lower end of the nut 22 extends into the accommodating slot 311and is pressed against the elastic member 33. An upper end of the nut 22 is configured to abut against a groove surface of the accommodating slot 311. The nut 22 is configured to compress the elastic member 33 to push the main core body 31 toward the valve port 12, causing the main core body 31 to seal the valve port 12. Optionally, the nut 22 is configured to abut against and fit with the groove surface of the accommodating slot 311 to drive the main core body 31 away from the valve port 12 to open the valve port 12.

Since the screw rod 21 is restricted by the fixed seat assembly 10 along an axis of the screw rod 21, and the screw rod 21 is configured to rotate around the axis of the screw rod 21. That is, the screw rod 21 can only rotate relative to the fixed seat assembly 10, and does not move axially relative to the fixed seat assembly 10; furthermore, since the nut 22 is sleeved on the outside of the screw rod 21 and is in threaded connection with the screw rod 21, and the outer surface of the nut 22 is restricted by the fixed seat assembly 10 along a circumference of the nut 22, the rotation of the screw rod 21 can be converted into the axial movement of the nut 22. Furthermore, the main core body 31 is provided with an accommodating slot 311, the elastic member is disposed in the accommodating slot 311, and the nut 22 extends into the accommodating slot 311and is pressed against the elastic member 33. Thus, the nut 22 is configured to compress the elastic member 33 to push the main core body 31 toward the valve port 12, causing the main core body 31 to seal the valve port 12. In addition, when the main core body 31 abuts against the valve port 12, the nut 22 can further press downward the elastic member 33, so that the elastic member can apply a sufficient elastic force to the main core body 31 to press the main core body 31, thereby helping to seal the valve port 12 more firmly to avoid leakage in the valve port 12.

The elastic member 33 may be configured as a spring. The transmission assembly 20 can further include a coil, a rotor 23 and a connecting plate 24. The connecting plate 24 can be fixed to the rotor 23, and the connecting plate 24 can be provided with a mounting hole 241. The screw rod 21 can extend in the mounting hole 241, and the screw rod 21 can be in interference fit with an inner surface of the mounting hole 241. The coil can be configured to drive the rotor 23 to rotate, and the rotor 23 can be configured to drive the screw rod 21 to rotate via the connecting plate 24.

In the related art, the screw rod 21 and the connecting plate 24 are fixed to the screw rod 21 and the connecting plate 24 by welding. However, the heat of welding is uneven or the welding quality at the welding position is uneven, resulting in a large difference in the coaxiality between the screw rod 21 and the connecting plate 24 after the welding process. Since the screw rod 21 is in interference fit with the mounting hole 241, the problem of reducing coaxiality caused by the welding process can be avoided.

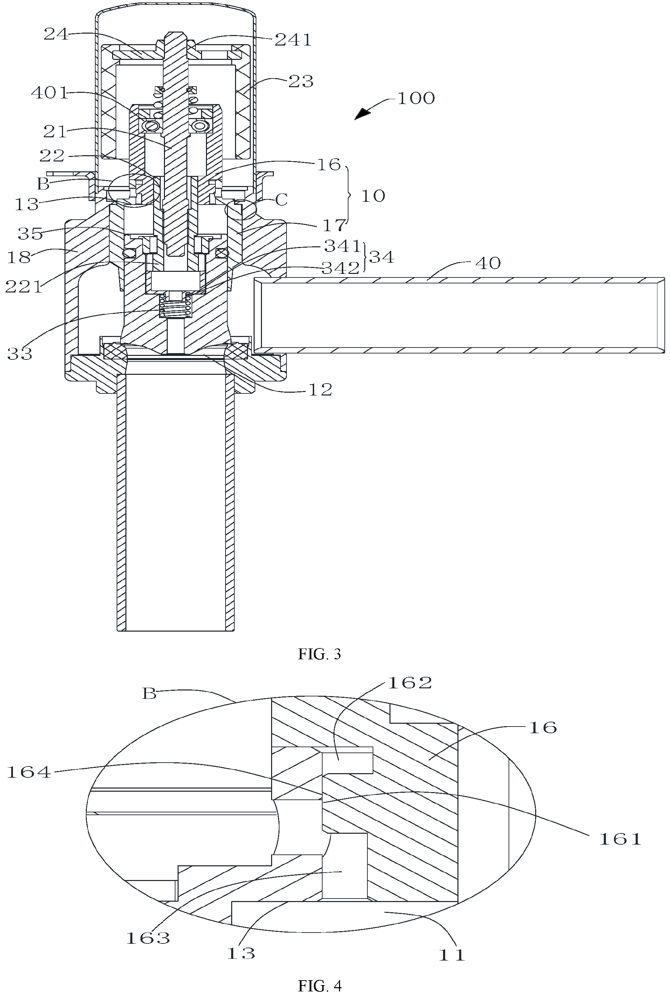

Furthermore, referring to FIG. 1 and FIG. 3, the valve core assembly 30 can further include a pressing block 32, an opening 311d of the accommodating slot 311 can be provided at a side of the accommodating slot 311away from the valve port 12, the pressing block 32 can be located in the accommodating slot 311, and the pressing block 32 can be fixed to the opening 311d of the accommodating slot 311. An end of the nut 22 adjacent to the valve port 12 can be provided with a restricting protrusion 221, an end of the restricting protrusion 221 along the axis thereof can be configured to press against the elastic member 33, and another end of the restricting protrusion can be configured to abut against the pressing block 32. By providing the restricting protrusion 221 and the pressing block 32, when the nut 22 moves away from the valve port 12, the restricting protrusion 221 abuts against the pressing block 32, so that a supporting force away from the valve port 12 can be applied to the pressing block 32, and then the main core body 31 is driven by the pressing block 32 to move away from the valve port 12 to open the valve port 12.

In some embodiments, the pressing block 32 can be ring-shaped, and the pressing block 32 can be connected to the inner surface of the accommodating slot 311by welding. The restricting protrusion 221 can be also ring-shaped, and the restricting protrusion 221 can protrude from the outer surface of the nut 22. The nut 22 and the restricting protrusion 221 can be an integral structure. In this way, a contact area between the restricting protrusion 221 and the pressing block 32 can be increased, so that the restricting protrusion 221 can drive the pressing block 32 to move. When the nut 22, the main core body 31, and the pressing block 32 are assembled, the restricting protrusion 221 may first extend into the accommodating slot 311, and then the pressing block 32 is connected to the opening 311d of the accommodating slot 311by welding.

Furthermore, referring to FIG. 1, the pressing block 32 can include a small-diameter section 321 and a large-diameter section 322, the small-diameter section 321 can be welded to the inner surface of the accommodating slot 311, and the large-diameter section 322 can be stopped by the outer surface of the opening 311d of the accommodating slot 311and can be welded to the outer surface of the opening 311d of the accommodating slot 311. In this way, a welding area between the pressing block 32 and the accommodating slot 311 can be increased, thereby improving firmness of connection between the pressing block 32 and the main core body 31.

Referring to FIG. 1 and FIG. 3, the valve core assembly 30 can further include a transmission block 34, the transmission block 34 can be restricted between the restricting protrusion 221 and the elastic member 33. The restricting protrusion 221 can be pressed against the elastic member 33 via the transmission block 34. A volume of the transmission block 34 is smaller than that of the nut 22, so when the contact area between the transmission block 34 and the elastic member 33 should be increased, the transmission block 34 can be customized according to requirements without changing the nut 22, which is beneficial to reducing the processing difficulty.

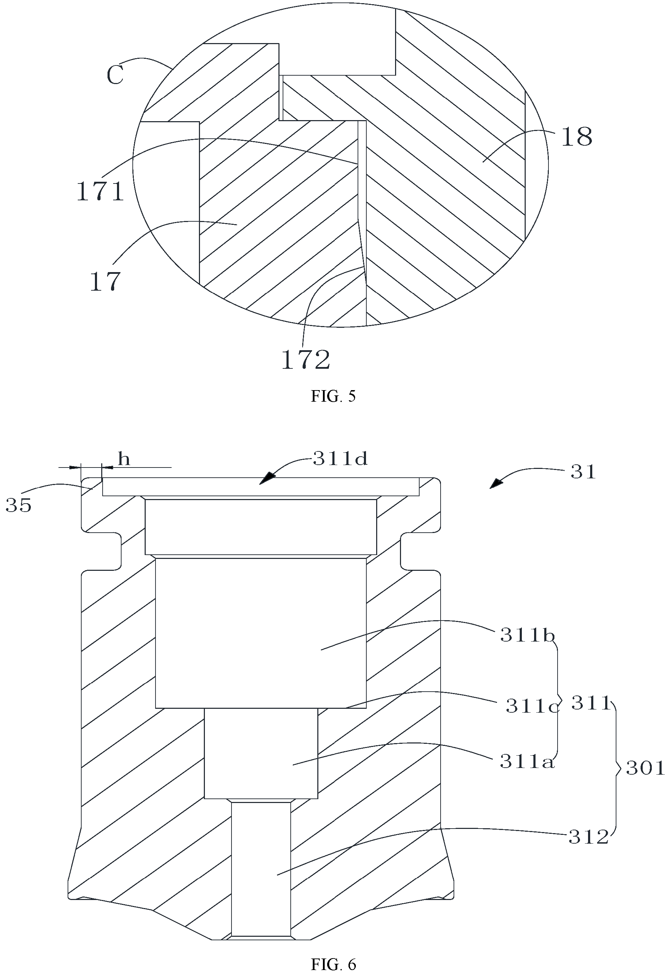

Referring to FIG. 2 and FIG. 6, the accommodating slot 311 can include a stopping surface 311c, the stopping surface 311c can be provided away from the valve port 12, and the elastic member 33 can be located at a side of the stopping surface 311c adjacent to the valve port 12. At least a part of the elastic member 33 can extend out from the stopping surface 311c, and an assembling gap 15 can be defined between the transmission block 34 and the stopping surface 311c. Since the transmission block 34 is restricted between the restricting protrusion 221 and the elastic member 33, the assembling gap 15 can be formed between the transmission block 34 and the stopping surface 311c by arranging at least a part of the elastic member 33 to extend out of the stopping surface 311c. In this way, when the electronic expansion valve 100 is closed, the stroke of the nut 22 can be divided into two sections. The first stage of valve closing stroke can be: the nut 22 can push the main core body 31 to move toward the valve port 12 via the transmission block 34 and the elastic member 33, and the main core body 31 can block the valve port 12. Then, the nut 22 can enter the second stage of valve closing stroke: the nut 22 can further compress the elastic member 33 via the transmission block 34, so that the transmission block 34 can further move a distance toward the valve port 12 until the transmission block 34 stops at the stopping surface 311c. The second stage stroke of the nut 22 can be equal to the width of the assembling gap 15. The second stage stroke of the nut 22 enables the elastic member to apply sufficient elastic force to the main core body 31 to press the main core body 31, which is beneficial to seal and block the valve port 12 more firmly to avoid leakage of the valve port 12.

When the electronic expansion valve 100 is opened, the stroke of the nut 22 can be also divided into two sections. The first stage of valve opening stroke can be: the nut 22 can move in a direction away from the valve port 12 until the restricting protrusion 221 abuts against the pressing block 32. At this time, the spring pushes the transmission block 34, and the assembling gap 15 can be formed again between the transmission block 34 and the stopping surface 311c. Then, the nut 22 can enter the second stage of valve opening stroke, and the restricting protrusion 221 drives the main core body 31 to move in a direction away from the valve port 12 via the pressing block 32, so as to open the valve port. The first stage of the valve opening stroke of the nut 22 is an idle stroke of the nut 22 for opening the valve, and the main core body 31 still blocks the valve port 12. That is, the valve port 12 is still in a closed state, and the elastic member 33 is in a compressed state, so that an elastic force in a direction toward the valve port 12 can be applied to the main core body 31, thereby ensuring that the valve port 12 has good sealing performance before being completely opened. In this way, the valve-opening idle stroke of the electronic expansion valve 100, that is, the over-closing amount of the electronic expansion valve 100, can be set by setting the width of the assembling gap 15.

Furthermore, in an embodiment, referring to FIG. 3 and FIG. 6, the accommodating slot 311 can include a first groove section 311a and a second groove section 311b in communication with each other. The first groove section 311a can be disposed adjacent to the valve port 12, and an inner diameter of the first groove section 311a can be less than an inner diameter of the second groove section 311b, so as to form a stopping surface 311c on a bottom wall of the second groove section 311b. The elastic member 33 can be located in the first groove section 311a, and the transmission block 34 can be located in the second groove section 311b. The transmission block 34 can include an abutting section 341 and a connecting section 342. The abutting section 341 can be configured to abut against and fit with the restricting protrusion 221, and the connecting section 342 can be configured to sleeve the elastic member 33. An outer diameter of the abutting section 341 can be greater than an outer diameter of the connecting section 342, so that the connecting section 342 can extend into the first groove section 311a. In this way, it is convenient to accommodate the elastic member 33, and the bottom wall of the second groove section 311b can form the stopping surface 311c, thereby facilitating processing of the stopping surface 311c.

Referring to FIG. 3, the fixed seat assembly 10 can include a connection sleeve 16 and a guide sleeve 17 which are welded and connected, and the guide sleeve 17 can be arranged adjacent to the valve port 12 The screw rod 21 can be restricted by an inner surface of the connection sleeve 16 and fit with the inner surface of the connection sleeve 16 along the axis of the screw rod 21. In some embodiments, a bearing 401 can be fixed on the inner surface of the connection sleeve 16, the screw rod 21 can extend through the bearing 401, and the screw rod 21 can form restriction convex rings at both ends of the bearing 401, respectively, so as to prevent the screw rod 21 from moving axially and realize circumferential rotation of the screw rod 21. The outer surface of the nut 22 can be restricted by the inner surface of the connection sleeve 16 and fit with the inner surface of the connection sleeve 16 along the circumference of the nut 22, so as to prevent the nut 22 from rotating circumferentially. In this way, the connection sleeve 16 and the guide sleeve 17 can be processed separately, and then the connection sleeve 16 and the guide sleeve 17 are connected by welding to enclose the valve cavity 11.

Furthermore, the guide sleeve 17 can be sleeved on an outer periphery of the connection sleeve 16, an inner surface of one end of the guide sleeve 17 adjacent to the connection sleeve 16 can form a restricting surface 13, and the main core body 31 can be stopped by the restricting surface 13. The restricting surface 13 can be configured to restrict the main core body 31, so as to limit the main core body 31 from continuing to move in a direction away from the valve port 12. After the main core body is completely opened, the main core body can abut against the restricting surface 13, and the stroke of the main core body 31 depends on the distance between the restricting surface 13 and the valve port 12. In the present application, because the screw rod 21 and the rotor 23 cannot move axially, when the overall height of the electronic expansion valve 100 remains unchanged, the height of the valve cavity 11 in which the rotor is located may be set to be smaller, and the distance between the restricting surface 13 and the valve port 12 may be set to be larger. Thus, the stroke of the main core body 31 can be increased, and the distance between the main core body 31 and the valve port 12 after the main core body 31 is completely opened can be increased, thereby increasing the maximum flow rate of the electronic expansion valve 100.

Furthermore, referring to FIG. 3 and FIG. 6, the main core body 31 can be provided with a restricting collar 35, and the restricting collar 35 can be provided at an end of the main core body 31 adjacent to the restricting surface 13. The restricting collar 35 can be configured to abut against the restricting surface 13. A thickness of the restricting collar 35 can be defined as *h*, and the thickness *h* of the restricting collar can be smaller than or equal to 1.5 mm. Since the restricting collar 35 is configured to abut against the restricting surface 13, a contact area between the restricting collar 35 and the restricting surface 13 will be excessively large when a cross-sectional area of the restricting collar 35 is excessively large. Because the viscosity of the refrigerant is relatively large, when the contact area between the restricting collar 35 and the restricting surface 13 is excessively large, the restricting collar 35 and the restricting surface 13 may be easily bonded, thereby reducing flexibility of an action of the main core body 31. Since the thickness *h* of the restricting collar can be smaller than or equal to 1.5 mm, the contact area between the restricting collar 35 and the restricting surface 13 is suitable, which facilitates improving the flexibility of the action of the main core body 31. For example, the thickness *h* of the restricting collar 35 may be 1.5 mm, 1.4 mm, 1.3 mm, or the like, which may be specifically set according to an actual situation, and is not listed one by one herein.

Referring to FIG. 3 and FIG. 4, the connection sleeve 16 can include a first wall 161a, the first wall 161a can be in contact with the guide sleeve 17, and a welding seam 164 can be defined between the first wall 161a and the guide sleeve 17. At an end of the first wall 161a away from the valve port 12, a welding groove 162 can be defined between the connection sleeve 16 and the guide sleeve 17, and the welding groove 162 can be in communication with the welding seam 164. At an end of the first wall 161a adjacent to the valve port 12, a second channel 163 can be defined between the connection sleeve 16 and the guide sleeve 17, and the second channel 163 can be configured to communicate the valve cavity 11 with the welding seam 164. The welding groove 162 can be configured to accommodate the solder. Since the width of the welding seam 164 is small, the solder can more easily penetrate into the welding seam 164 under capillary action. Thus, the connection sleeve 16 can be welded to the guide sleeve 17 at 161a. The capillary action refers to a process in which a liquid flows in a narrow space. In order to prevent the solder from reaching the restricting surface 13 along the welding seam 164 and accumulating on the restricting surface 13, and affecting the abutting fit between the restricting collar 35 and the restricting surface, the second channel 163 is provided with a larger cross-sectional area. Thus, the solder can be not easy to cause capillary action in the second channel 163. That is, the solder would be not easy to diffuse along the surface of the second channel 163, so that the second channel 163 can accommodate the excess solder flowing out from the welding seam 164 without causing the part of the solder to flow to the restricting surface 13.

Referring to FIG. 3 and FIG. 5, the fixed seat assembly 10 can further include a valve seat 18, the valve seat 18 can be sleeved outside the guide sleeve 17, and the valve cavity 11 can be enclosed between the valve seat 18 and the guide sleeve 17. The guide sleeve 17 can include a guiding section 171 and a connecting section 172. The guiding section 171 can be provided adjacent to the connection sleeve 16 relative to the connecting section 172. The guiding section 171 can be in clearance fit with an inner surface of the valve seat 18. Along a direction from the connection sleeve 16 to the valve cavity 11, an outer size of the guiding section 171 may increase, and the connecting section 172 can be in interference fit with the inner surface of the valve seat 18. The valve seat 18 can be configured to connect the inlet pipe 40, the inlet pipe 40 can insert in a sidewall of the valve seat 18 and can be in communication with the valve cavity 11, and the refrigerant can flow into the valve cavity 11 from the inlet pipe 40. During the assembly of the valve seat 18 and the guide sleeve 17, the guiding section 171 can play a guiding role, so that the valve seat 18 can be sleeved on the outside of the guide sleeve 17 from the surface of the guiding section 171. In addition, since the connecting section 172 is in interference fit with the inner surface of the valve seat 18, the valve seat 18 can be more firmly connected to the guide sleeve 17.

Furthermore, the connection sleeve 16, the guide sleeve 17, the valve seat 18 and the inlet pipe 40 can be integrally connected together by furnace welding. Compared with the method of laser welding, the method of furnace welding would not easily cause a single side lifting between the connection sleeve 16, the guide sleeve 17, the valve seat 18 and the inlet pipe 40, thereby improving the coaxiality of the connection sleeve 16, the guide sleeve 17 and the valve seat 18.

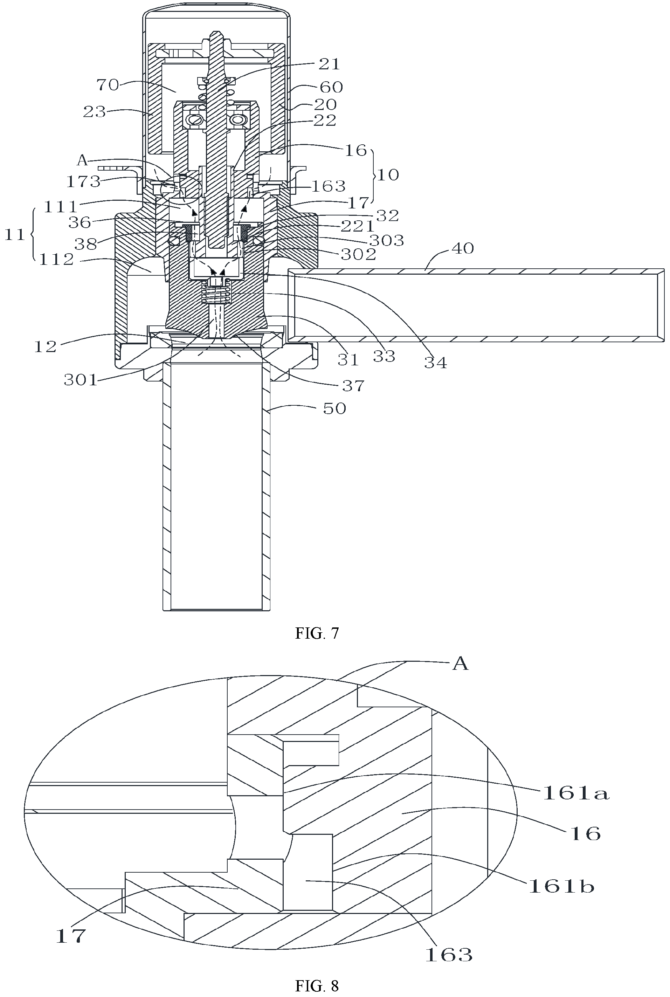

Referring to FIG. 7 and FIG. 4, an outer surface of the main core body 31 can be in sealing fit with an inner surface of the valve cavity 11, and the outer surface of the main core body 31 can be movable relative to the inner surface of the valve cavity 11. The main core body 31 can be configured to separate the valve cavity 11 into an upper cavity 111 and a lower cavity 112. The lower cavity 112 can be configured to communicate the inlet pipe 40 and the valve port 12. The main core body 31 can include an upper end surface 36 and a lower end surface 37. The upper end surface 36 can face the upper cavity 111, and the lower end surface 37 can face the valve port 12. The main core body 31 can include a first channel 301 extending through the upper end surface 36 and the lower end surface 37. The lower end surface 37 can be configured to block the valve port 12. When the lower end surface 37 blocks the valve port 12, the valve port 12 can be in communication with the upper cavity 111 via the first channel 301

A working process of the electronic expansion valve 100 can be as follows. When the lower end surface 37 opens the valve port 12, the refrigerant can enter the lower cavity 112 from the inlet pipe 40, and then flow out of the lower cavity 112 through the valve port 12 and the outlet pipe 50; when the lower end surface 37 blocks the valve port 12, the refrigerant flow path can be cut off and the refrigerant cannot enter the outlet pipe 50. When the lower end surface 37 blocks the valve port 12, the pressure at the outlet pipe 50 can be lower than the pressure in the valve cavity 11. By providing the first channel 301, the outlet pipe 50 can be in communication with the upper cavity 111, so that the pressure applied to the lower end surface 37 can be consistent with the pressure applied to the upper end surface 36, thereby facilitating the transmission assembly 20 to drive the main core body 31 to move upward to open the valve port 12. Moreover, since the outer surface of the main core body 31 is in sealing fit with the inner surface of the valve cavity 11 to divide the valve cavity 11 into the upper cavity 111 and the lower cavity 112, the refrigerant in the lower cavity 112 cannot flow into the upper cavity 111 when the valve port 12 is closed. Thus, the refrigerant cannot flow into the outlet pipe 50 from the groove opening on the upper end surface 36 and the first channel 301.

In some embodiments, referring to FIG. 6 and FIG. 7, the main core body 31 can be further provided with a third channel 312, and the accommodating slot 311 can be communicated with the third channel 312 to form a first channel 301.

An annular-shaped mounting site 302 can be formed in the accommodating slot 311. An end of the transmission assembly 20 can be provided with a restricting protrusion 221, and the restricting protrusion 221 can be disposed in the annular-shaped mounting site 302. Two ends of the restricting protrusion 221 can abut against two opposite sidewalls of the annular-shaped mounting site 302 along an axis of the restricting protrusion 221, respectively. A connection channel 303 can be defined between an outer surface of the restricting protrusion 221 and an inner surface of the annular-shaped mounting site 302. In this way, the restricting protrusion 221 can drive the main core body 31 to move towards the valve port 12 by abutting against one of the sidewalls of the annular-shaped mounting site 302, and the restricting protrusion 221 can drive the main core body 31 to move away from the valve port 12 by abutting against another of the sidewalls of the annular-shaped mounting site 302. Furthermore, since the connection channel 303 is defined between an outer surface of the restricting protrusion 221 and an inner surface of the annular-shaped mounting site 302, the first channel 301 can be prevented rom being blocked by the restricting protrusion 221. That is, the first channel 301 can be ensured to be in the connected state.

The transmission assembly 20 can further include a rotor 23, a screw rod 21 and a nut 22. The screw rod 21 can be fixed to the fixed seat assembly 10 along the axis of the screw rod 21. The rotor can be configured to drive the screw rod 21 to rotate around the axis of the screw rod 21. The nut 22 can be sleeved on the outside of the screw rod 21 and in threaded fit with the screw rod 21. The outer surface of the nut 22 can be restricted to the fixed seat assembly 10 along the circumference of the nut 22. The restricting protrusion 221 can be provided at an end of the nut 22 adjacent to the main core body 31. In this way, rotation of the screw rod 21 can be converted into axial movement of the nut 22, and the main core body 31 can be driven to move by the restricting protrusion 221.

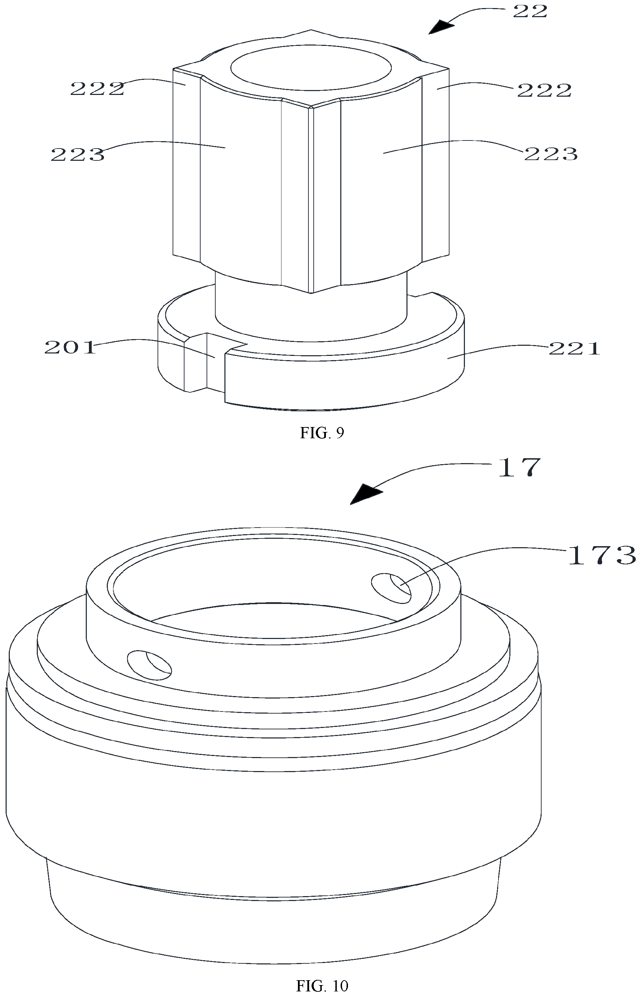

Referring to FIG. 7 and FIG. 9, the outer surface of the restricting protrusion 221 can be provided with a notch 201, the notch 201 can extend through the two ends of the restricting protrusion 221 along the axis of the restricting protrusion 221, and the connection channel 303 can be enclosed between the notch 201 and the inner surface of the annular-shaped mounting site 302. The notch 201 and an upper edge of the annular-shaped mounting site 302 can be staggered along a radial direction of the annular-shaped mounting site 302, and the notch 201 and a lower edge of the annular-shaped mounting site 302 can be staggered along a radial direction of the annular-shaped mounting site 302, so that the connection channel 303 can be in communication with the first channel 301. Since the notch 201 and an upper edge of the annular-shaped mounting site 302 are staggered along a radial direction of the annular-shaped mounting site 302, and the notch 201 and a lower edge of the annular-shaped mounting site 302 are staggered along a radial direction of the annular-shaped mounting site 302, two ends of the notch 201 can be in communication with the first channel 301, respectively, so that the restricting protrusion 221 would not block the first channel 301.

Referring to FIG. 9, the notch 201 can be configured as a through groove extending axially along the restricting protrusion 221, so that the notch 201 may have a simple shape and low processing difficulty. There may be a plurality of notches 201, and the plurality of notches 201 can be spaced from each other along the circumference of the restricting protrusion 221. In this way, a plurality of connection channels 303 spaced from each other can be formed. That is, the overall flow area of the connection channels 303 can be increased, thereby facilitating rapid flow of gas between the lower cavity 112 and the upper cavity 111, and facilitating faster pressure balance between the lower cavity 112 and the upper cavity 111.

Furthermore, the plurality of notches 201 may be evenly spaced from each other along the circumference of the restricting protrusion 221.

Referring to FIG. 7, the electronic expansion valve 100 can further include a pressing block 32 and a transmission block 34. The pressing block 32 and the transmission block 34 can be connected to an inner surface of the first channel 301, respectively. The pressing block 32 and the transmission block 34 can be spaced from each other along the axis of the first channel 301, so that the transmission block 34, the inner surface of the first channel 301 and the pressing block 32 enclose to form the annular-shaped mounting site 302. The restricting protrusion 221 drive the main core body 31 to move towards the valve port 12 by abutting against two opposite sidewalls of the annular-shaped mounting site 302. That is, the restricting protrusion 221 can be snapped between the upper wall surface of the annular-shaped mounting site 302 and the lower wall surface of the annular-shaped mounting site 302 along the axis of the restricting protrusion 221. By providing the pressing block 32 and the transmission block 34 separated from each other, and enclosing annular-shaped mounting site 302 between transmission block 34, the inner surface of the first channel 301 and the pressing block 32, the transmission assembly 20 can be assembled to the main core body 31. During actual assembly, the transmission block 34 can be firstly connected into the first channel 301, then the restricting protrusion 221 can extend into the first channel 301, and finally the pressing block 32 can be connected into the first channel 301. Furthermore, the pressing block 32 can be annular-shaped, and the pressing block 32 can be connected to the inner surface of the first channel 301 by welding.

In some embodiments, referring to FIG. 6, the transmission block 34 may not be provided, and the stopping surface 311c, the inner surface of the first channel 301 and the pressing block 32 can enclose to form the annular-shaped mounting site 302.

Furthermore, the pressing block 32 can be provided adjacent to the upper end surface 36, a flow gap 38 can be defined between an inner surface of the pressing block 32 and an outer surface of the nut 22, and the lower end surface 37 can be in fluid communication with the upper end surface 36 via the first channel 301, the connection channel 303 and the flow gap 38. By providing the flow gap 38, block of the first channel 301 by the pressing block 32 can be avoided. That is, fluid communication between the upper end surface 36 and the lower end surface 37 can be ensured by providing the flow gap 38.

Referring to FIG. 7 and FIG. 10, the electronic expansion valve 100 can further include an outer housing 60. The outer housing 60 can be covered on a side of the fixed seat assembly 10 away from the valve port 12. A rotor cavity 70 can be enclosed between the outer housing 60 and the fixed seat assembly 10. A sidewall of the fixed seat assembly 10 can be provided with a through hole 173, and the through hole 173 can be configured to communicate the upper cavity 111 with the rotor cavity 70.

The rotor cavity 70 can be configured to accommodate the rotor 23, the connecting plate 24, and the screw rod 21. The lower end of the nut 22 can extend into the first channel 301, the upper end of the nut 22 can be located in the connection sleeve 16 and can be in threaded connection with the screw rod 21, the rotor cavity 70 can be in communication with the connection sleeve 16, and the upper cavity 111 can be in communication with the rotor cavity 70 by providing the through hole 173. Thus, the pressure of the upper end surface of the nut 22 and the pressure of the lower end surface of the nut 22 can be balanced, so that the nut 22 would not be affected by the pressure difference between the upper and lower ends of the nut 22 when the nut 22 moves up and down. That is, the screw rod 21 cand drive the nut 22 to move up and down.

In some embodiments, the fixed seat assembly 10 can include a connection sleeve 16 and a guide sleeve 17 fixed to the connection sleeve 16. The connection sleeve 16 can be configured to dispose the transmission assembly 20. The valve cavity can be provided in the guide sleeve 17, and the through hole 173 can be provided on the guide sleeve 17. In this way, the connection sleeve 16 and the guide sleeve 17 can be processed separately, and then the connection sleeve 16 and the guide sleeve 17 can be connected together by welding, which can reduce the processing difficulty compared with providing the fixed seat assembly 10 as an integrally formed part.

In some embodiments, referring to FIG. 7 and FIG. 8 the connection sleeve can include a first wall 161a and a second wall 161b. The first 161a can be connected to the guide sleeve 17 by welding, and the second wall 161b and the guide sleeve 17 are spaced from each other. In addition, a second channel 163 can be defined between the second wall 161b and the guide sleeve 17, and the second channel 163 is in communication with the first channel 301.

Specifically, the first wall 161a is in contact with the guide sleeve 17 so that the first wall 161a is connected to the guide sleeve 17 by welding. The second wall 161b is located at an end of the first wall 161a adjacent to the valve port 12, and the second channel 163 is defined between the second wall 161b and the guide sleeve 17, so that the second channel 163 can not only communicate the upper cavity 111 with the through hole 173, but also accommodate excess solder between the first wall 161a and the guide sleeve 17, thereby preventing the solder from flowing into the upper cavity 111.

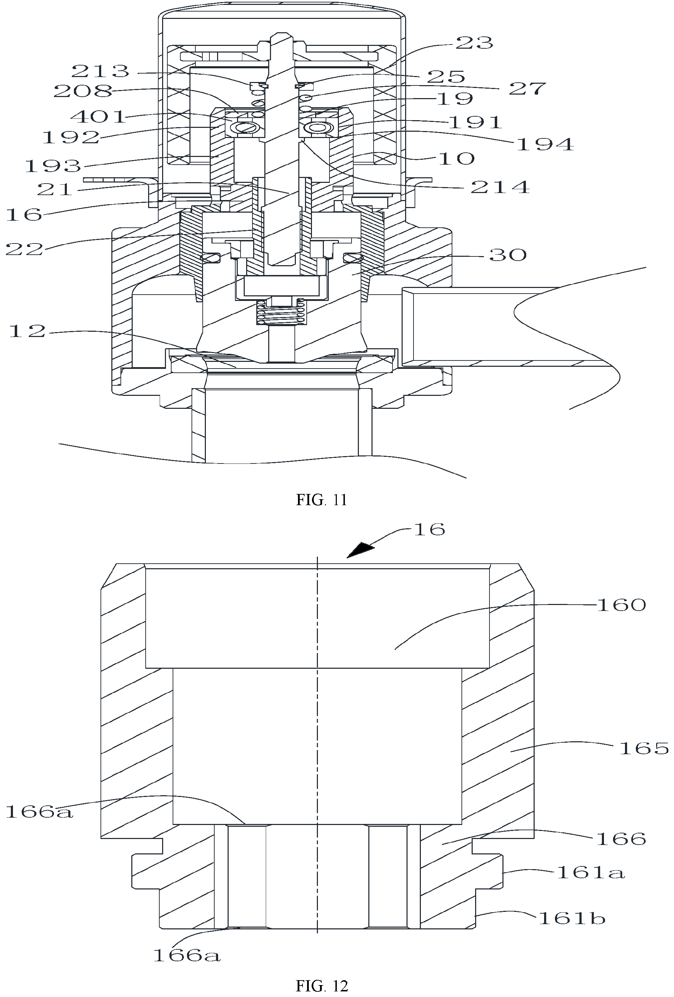

Referring to FIGs. 11 to 13, an outer surface of the nut 22 can include an arc-shaped surface 223 and a protrusion portion 222, and the protrusion portion 222 can protrude from arc-shaped surface 223 along a radial direction of the arc-shaped surface 223. The fixed seat assembly 10 can include a mounting channel 160, an inner surface of the mounting channel 160 can include a centering surface 160a and a restricting surface 160b, the centering surface 160a can be in contact with the arc-shaped surface 223, and the restricting surface 160b can be in contact with the protrusion portion 222. The nut 22 can be configured to move relative to the connection sleeve 16 along an axis of the nut 22, and the restricting surface 160b can be configured to fit with the protrusion portion 222, so as to restrict rotation of the nut 22 along a circumference of the nut 22. In some embodiments, the mounting channel 160 can be provided on the connection sleeve 16.

Since the restricting surface 160b is in contact with the protrusion portion 222 and the protrusion portion 222 protrudes from arc-shaped surface 223 along the radial direction of the arc-shaped surface 223, the mounting channel 160 can prevent the nut 22 from rotating by applying a force opposite to the rotation direction of the screw rod 21 to the protrusion portion 222 via the restricting surface 160b when the screw rod 21 is in threaded fit with the nut 22. The arc-shaped surface 223 can fit the centering surface 160a more closely, so that the nut 22 will be not prone to eccentricity. That is, it is beneficial to center the nut 22 to improve the coaxiality between the nut 22 and the connection sleeve 16, thereby avoiding the increase of the friction force when the nut 22 is in threaded fit with the screw rod 21 due to eccentricity.

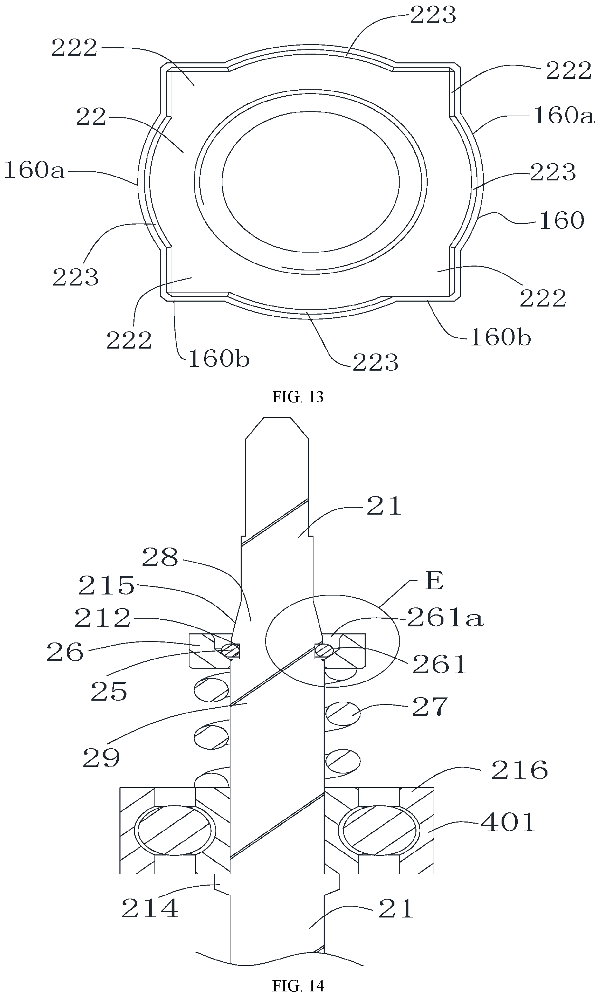

Furthermore, referring to FIG. 13, a shape of the inner surface of the mounting channel 160 can be the same as a shape of the outer surface of the nut 22, and the outer surface of the nut 22 can be in contact with the inner surface of the mounting channel 160. In this way, the degree of fitting between the inner surface of the mounting channel 160 and the outer surface of the nut 22 can be further improved, thereby improving the coaxiality between the nut 22 and the connection sleeve 16.

There may be a plurality of protrusion portions 222, and the plurality of protrusion portions 222 can be spaced from each other along the circumference of the nut 22. By providing the plurality of protrusion portions 222, the circumferential restricting area between the nut 22 and the connection sleeve 16 can be increased, which is conducive to improving the restricting effect of the connection sleeve 16 on the nut 22, and is further conducive to preventing the nut 22 from rotating. For example, the number of the protrusion portions 222 may be three, four, five, six, or the like, which may be specifically set according to actual conditions and will not be listed one by one herein.

Furthermore, the plurality of protrusion portions 222 are evenly spaced from each other along the circumference of the nut 22. When the screw rod 21 is in threaded fit with the nut 22, the inner surface of the mounting channel 160 can prevent the nut 22 from rotating by applying a force opposite to the rotation direction of the screw rod 21 to the nut 22. That is, the protrusion portion 222 can be a force-bearing position of the nut 22. Therefore, the plurality of protrusion portion protrusion portions 222 can be evenly spaced from each other along the circumference of the nut 22. The nut 22 can be stressed more uniformly in the circumferential direction.

In an embodiment, referring to FIG. 9, the protrusion portion 222 can be configured as strip-shaped, and the protrusion portion 222 can extend along the axis of the nut 22. By setting the protrusion portion 222 as strip-shaped, the nut 22 can be uniformly stressed along the axis thereof while increasing the stressed area of the nut 22. In some embodiments, the protruding strips can extend through both ends of the nut 22 along the axis of the nut 22. Of course, the protrusion portion 222 may also be provided in a block-shaped, a convex column-shaped, or the like.

Referring to FIG. 13, along a direction from the axis of the nut 22 to the arc-shaped surface 223, a width of a cross-section of the protrusion portion 222 may decrease. That is, an end of the protrusion portion 222 adjacent to the nut 22 can be wider, and an end of the protrusion portion 222 away from the axis of the nut 22 can be narrower, so that it is convenient to clamp the protrusion portion 222 into the mounting channel 160. Therefore, it is convenient to assemble the nut 22 and the connection sleeve 16.

Furthermore, along a direction from the axis of the nut 22 to the arc-shaped surface 223, a width of a cross-section of the protrusion portion 222 may gradually decrease. That is, in some embodiments, the cross section of the protrusion portion 222 can be triangular-shaped, and the surface of the protrusion portion 222 can be defined by two planes arranged at an angle. In this way, the surface of the protrusion portion 222 is simple in shape and convenient to machine. In some embodiments, the nut 22 can be machined to form the protrusion portion 222 by turning. In some embodiments, the surface of the protrusion portion 222 may also be configured as a curve-shaped surface.

Referring to FIG. 12, the connection sleeve 16 can include a restricting section 166 and an accommodating section 165, an inner diameter of the restricting section 166 can be smaller than an inner diameter of the accommodating section 165, the outer surface of the nut 22 can be in contact with the inner surface of the restricting section 166 and can be configured to slide along the inner surface of the restricting section 166, and the outer surface of the nut 22 can be spaced from the inner surface of the accommodating section 165. In some embodiments, the inner surface of the restricting section 166 can form the mounting channel 160. The inner diameter of the restricting section 166 can be smaller than the inner diameter of the accommodating section 165, that is, the inner diameter of the accommodating section 165 can be larger than the inner diameter of the restricting section 166, so that the accommodating section 165 can accommodate the nut 22 without contacting the outer surface of the nut 22 when the nut 22 moves axially. Furthermore, the restricting section 166 and the accommodating section 165 are an integral structure. In some embodiments, the connection sleeve 16 can be formed by turning or casting. Referring to FIG. 12, the first wall 161a and the second wall 161b can be both disposed on the restricting section 166.

In an embodiment, referring to FIG. 12, the restricting section 166 can be provided with a recessed portion 166a, and the recessed portion 166a can be provided corresponding to the protrusion portion 222. The recessed portion166a can be provided at an end of the restricting section 166 along an axis of the restricting section 166, and the recessed portion can be configured to flare outwardly relative to the axis of the restricting section 166. It should be noted that "the recessed portion 166a can be provided corresponding to the protrusion portion 222" means that the position of the recessed portion 166a corresponds to the protrusion portion 222, and the number of the recessed portions 166a corresponds to the protrusion portion 222. The assembly process of the nut 22 and the connection sleeve 16 can be as follows. The nut 22 can extend through the restricting section 166 along the radial direction of the nut 22, so that the two ends of the restricting section 166 along the axis of the restricting section 166 can be provided with the recessed portion 166a, and the recessed portion 166a can expand outward relative to the axis of the restricting section 166. During the assembly of the nut 22 and the connection sleeve 16, the recessed portion 166a can provide a clearance space for the protrusion portion 222, thereby preventing the outer edge of the protrusion portion 222 from scratching the end surfaces at the two ends of the restricting section 166.

Referring to FIG. 11, the fixed seat assembly 10 can be provided with an assembling hole 19, and the bearing 401 can be disposed in the assembling hole 19. The screw rod 21 can extend through the bearing 401, and the screw rod 21 can circumferentially rotate around the axis thereof. An inner ring of the bearing 401 can be in clearance fit with the screw rod 21. In some embodiments, an outer ring of the bearing 401 can be clearance fit with an inner surface of the assembling hole 19. In some embodiments, the inner ring of the bearing 401 can be in clearance fit with the screw rod 21, and the outer ring of the bearing 401 can be clearance fit with the inner surface of the assembling hole 19. Since the bearing 401 can be disposed in the assembling hole 19 and the screw rod 21 can extend through the bearing 401, the bearing 401 can restrict the screw rod 21 and the screw rod can rotate more stably. In addition, because the inner ring of the bearing 401 is in clearance fit with the screw rod 21 or the outer ring of the bearing 401 is in clearance fit with the inner surface of the assembling hole 19, an accommodating space can be formed on at least one side of the inner surface of the bearing or the outer surface of the bearing. Thus, the bearing 401 can be prevented from being deformed due to the fact that the screw rod 21 and the assembling hole 19 snap the bearing 401 too tightly, thereby avoiding an increase in a rotational friction force of the bearing 401 and an increase in a rotational friction force of the screw rod 21.

Specifically, the assembling hole 19 can be provided at an end of the connection sleeve 16 away from the mounting channel 160. Referring to FIG. 11, a mounting groove 191 can be formed in the assembling hole 19, the bearing 401 can be disposed in the mounting groove 191, and two ends of the bearing 401 along an axis of the bearing 401 respectively can abut against two opposite sidewalls of the mounting groove 191. By providing the mounting groove 191, the bearing 401 can be axially restricted in the assembling hole 19.

In some embodiments, the transmission assembly 20 can further include a mounting seat 208, the assembling hole 19 can include a first section 192 and a second section 193 in communication with each other, and an inner diameter of the first section 192 can be greater than an inner diameter of the second section 193. Thus, a stopping step 194 can be formed at a joint between the first section 192 and the second section 193, the mounting seat 208 can be fixed to an inner surface of the first section 192, and a mounting groove 191can be enclosed between the mounting seat 208 and the stopping step 194.

When the fixed seat assembly 10 is assembled with the bearing 401, the bearing 401 may be first placed from the first section 192 with a larger inner diameter, and the bearing 401 may be stopped at the stopping step 194; and then the mounting seat 208 may be disposed into the first section 192 and fixed to the inner surface of the first section 192.

The screw rod 21 can be restricted relative to the axis of the bearing 401 by methods in the following two embodiments.

### First Embodiment

Referring to FIG. 11, a first restricting step 213 and a second restricting step 214 can be defined on an outer surface of the screw rod 21, and the first restricting step 213 and the second restricting step 214 can be spaced from each other along the axis of the screw rod 21. The first restricting step 213 and the second restricting step 214 can be configured to restrict two ends of the bearing 401, respectively, so as to restrict axially move of the screw rod 21. By providing the first restricting step 213 and the second restricting step 214, the screw rod 21 can only rotate circumferentially around the axis of the screw rod 21 and cannot move relative to the bearing 401 along the axis of the screw rod 21.

Furthermore, the electronic expansion valve 100 can further include an elastic supporting member 27, wherein an end of the elastic supporting member 27 can be connected to the first restricting step 213, and another end of the elastic supporting member 27 can be connected to a side of the bearing 401 away from the second restricting step 214. By providing the elastic supporting member 27, the elastic supporting member 27 can be compressed between the first restricting step 213 and the bearing 401, so that the elastic supporting member 27 can have an elastic force. The elastic force can act on the bearing 401 and point towards the second restricting step 214, so that the bearing 401 can be in tightly contact with the second restricting step 214. In this way, the axial gap between the screw rod 21 and the bearing 401 can be eliminated. At the same time, the elastic force can act on the first restricting step 213 and points to the first restricting step 213, so as to provide an upward supporting force for the screw rod 21, so as to restrict the screw rod 21 axially downward, and prevent the screw rod 21 from moving axially downward. The electronic expansion valve 100 of the present application can be provided with a rotor 23, the rotor 23 can be connected to the screw rod 21, and the rotor 23 can drive the screw rod 21 to rotate when rotating. The elastic supporting member 27 can be configured as a compression spring sleeved on the outer surface of the screw rod 21, and the elastic force can be greater than the driving force of the coil, so that the screw rod will not move axially downward against the elastic force of the elastic supporting member 27 under the drive of the rotor 23.

The first restricting step 213 and the second restricting step 214 can be ring-shaped, respectively, so that the contact area between the first restricting step 213 and the spring can be increased, and the periphery of the screw rod 21 can be subjected to a more uniform axial force.

Furthermore, at least one of the first restricting step 213 and the second restricting step 214 can be detachably connected to the screw rod 21. Since the screw rod 21 should extend through the bearing 401, the first restricting step 213 can be detachably connected to the screw rod 21. When the screw rod is assembled with the bearing 401, one end of the screw rod 21 for mounting the first restricting step 213 can first extend through the bearing 401, and then the first restricting step 213 can be mounted on the screw rod 21.

In some embodiments, the second restricting step 214 can be detachably connected to the screw rod 21. When the screw rod 21 is assembled with the bearing 401, one end of the screw rod 21 for disposing the second restricting step 214 may first extend through the bearing 401, and then the second restricting step 214 can be disposed on the screw rod 21. In this way, it is convenient to assemble the screw rod 21 and the bearing 401.

### Second Embodiment

The screw rod 21 can be fixed to the inner ring of the bearing 401, and the outer ring of the bearing 401 can be in clearance fit with the inner surface of the assembling hole 19. Since the bearing 401 is disposed in the assembling hole 19, the screw rod 21 can drive the inner ring of the bearing 401 to rotate without moving axially relative to the bearing 401 by fixing the screw rod 21 to the inner ring of the bearing 401. That is, the inner ring of the bearing 401 would not move axially in the assembling hole 19. In some embodiments, the screw rod 21 may be clamped to the inner ring of the bearing 401, or may be connected to the inner ring of the bearing 401 by a screw.

Referring to FIGs. 11, 14 and 15, the electronic expansion valve 100 can further include a snap ring 25, and the outer surface of the screw rod 21 can be provided with a mating groove 212. The first restricting step 213 can be configured as a restricting collar 26, the restricting collar 26 can be sleeved on the outer surface of the screw rod 21, the restricting collar 26 can be provided with an assembling groove 261 corresponding to the mating groove 212, the assembling groove 261 can include a groove opening 261a, an assembling gap 262 an be defined between the groove opening 261a and the screw rod 21, and the width of the assembling gap 262 can be defined as *L*. At least a part of the snap ring 25 can be accommodated in the mating groove 212, and another part of the snap ring 25 can be accommodated in the assembling groove 261. A size of the snap ring 25 can be defined as *D*, and the size *D* of the snap ring 25 can be greater than the width *L* of the assembling gap 262. When the end of the restricting collar 26 away from the assembling groove 261 is subjected to a force towards the groove opening 261a along the axis of the screw rod 21, the inner surface of the assembling groove 261 can cooperate with the inner surface of the mating groove 212 to snap the snap ring 25.

At least a part of the snap ring 25 is accommodated in the mating groove 212, and the other part of the snap ring 25 is accommodated in the assembling groove 261. Thus, when the end of the restricting collar 26 away from the assembling groove 261 is subjected to a force towards the groove opening 261a along the axis of the screw rod 21, the restricting collar 26 can push the snap ring 25 to abut against the edge of the mating groove 212 adjacent to the groove opening 261a via the inner surface of the assembling groove 261, so that the circlip is restricted between the screw rod 21 and the restricting collar 26 along the axis of the screw rod 21. Furthermore, because the size *D* of the snap ring 25 is greater than the width *L* of the assembling gap 262, the snap ring 25 would not separate from the mating groove 212 along the assembling gap *L* even if the snap ring 25 rolls, so that the assembly of the snap ring 25 can be more stable.

Referring to FIG. 14, the elastic supporting member 27 can be connected to the end of the restricting collar 26 away from the groove opening 261a, and the elastic supporting member 27 can be configured to push the restricting collar 26 to move along the axis of the screw rod 21 toward the end of the restricting collar 26 where the mating groove 212 is located. The elastic supporting member 27 can apply a force on the snap ring 25 along a direction from the axis of the screw rod 21 to the groove opening 261a.

In some embodiments, the elastic supporting member 27 may be configured as a spring, and the spring can be sleeved on an outer surface of the screw rod 21. In this way, when the electronic expansion valve 100 should be disassembled, the electronic expansion valve 100 could be disassembled by moving the restricting collar 26 in a direction towards the elastic supporting member 27 and disengaging the snap ring 25 from the mating groove 212.

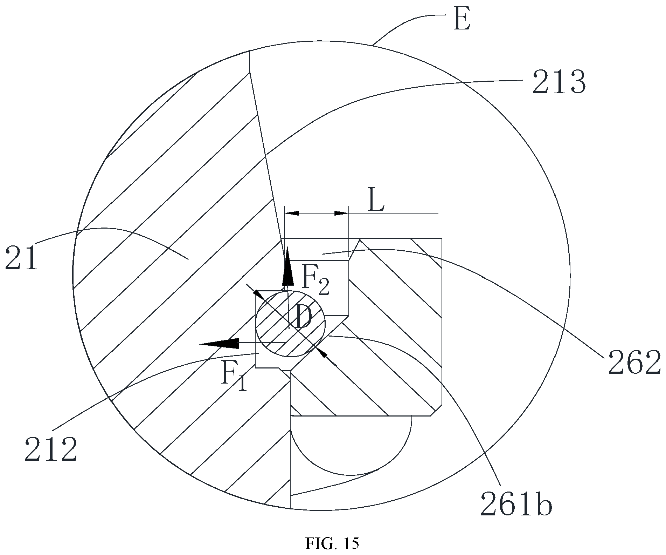

Referring to FIGs. 14 and 15, an outer surface of the screw rod 21 can be provided with a guiding inclined surface 215, the guiding inclined surface 215 can be provided at a side of the mating groove 212, and along a direction from the guiding inclined surface 215 to the mating groove 212, a distance between the guiding inclined surface 215 and the axis of the screw rod 21 can increase.

The inner size of the snap ring 25 is generally smaller than the diameter of the mating groove 212, so that the snap ring 25 is in an expanded state in the mating groove 212, and the screw rod 21, the snap ring 25 and the restricting collar 26 is more tightly in contact with each other. In this way, the outer diameter of the screw rod 21 adjacent to the mating groove 212 is generally much larger than the inner size of the snap ring 25, which makes it difficult for the snap ring 25 to slide at the screw rod 21 adjacent to the mating groove 212, so that the snap ring 25 cannot be smoothly loaded into the mating groove 212. In the present application, the guiding inclined surface 215 can be provided, and the distance between the guiding inclined surface 215 and the axis of the screw rod 21 increases along the direction from the mating groove 212 to the elastic supporting member 27. In a process in which the snap ring 25 moves along the guiding inclined surface 215, the guiding inclined surface 215 can gradually stretch the snap ring 25, so that the snap ring 25 can be smoothly loaded into the mating groove 212. That is, the guiding inclined surface 215 can play a role of transitioning and guiding the snap ring 25.

Specifically, referring to FIG. 14, the screw rod 21 can include a lead-in section 28 and an assembling section 29, an outer surface of the lead-in section 28 can form a guiding inclined surface 215, and the mating groove 212 can be provided at an end of the assembling section 29 adjacent to the lead-in section 28. The end of the lead-in section 28 with the larger diameter can be defined as one sidewall of the mating groove 212. As such, the snap ring 25 may slide directly into the mating slot 212 along the guiding inclined surface 215. Thus, the movement stroke of the snap ring 25 in the expanded state may be shortened. In this way, the snap ring 25 can be assembled into the mating groove 212 more quickly.

In some embodiments, the lead-in section 28 can be frustum-shaped, and the lead-in section 28 and the assembling section 29 are an integral structure. The screw rod 21 may be formed by turning to form the lead-in section 28, the assembling section 29 and the mating groove 212, respectively.

Referring to FIG. 15, the assembling groove can be provided with an abutting inclined surface 261b, and the abutting inclined surface 261b can be configured to abut against the snap ring 25. The abutting inclined surface 261b can face the groove opening. Along a direction from elastic supporting member 27 to the groove opening 212, a distance between the abutting inclined surface 261b and an axis of the restricting collar 26 can increase. In this way, the acting force applied by the abutting inclined surface 261b to the circlip can be decomposed into a first component force F₁ parallel to the radial direction of the screw rod 21 and a second component force F₂ parallel to the axis of the screw rod 21, wherein the first component force F₁ can push the snap ring 25 to be stopped by the inner surface of the mating groove 212 in the radial direction, and the second component force F₂ can push the snap ring 25 to abut against the edge of the mating groove 212 adjacent to the groove opening 261a, so that the snap ring 25 is would not be easily separated from the mating groove 212.

The mating groove 212 can be configured as a ring-shaped groove, and a cross section of the mating groove 212 can be rectangular-shaped. The mating groove 212 can be configured as a ring-shaped groove to fit with the shape of the snap ring 25. In some embodiments, the cross section of the mating groove 212 may also be configured as arc-shaped.

In an embodiment, an edge of the groove opening 261a can be provided with a chamfer. When the electronic expansion valve 100 is assembled, the restricting collar 26 should move from the end adjacent to the elastic supporting member 27 along the surface of the screw rod 21 until the snap ring 25 is loaded into the assembling groove 261, the edge of the groove opening 261a is provided with a chamfer to prevent the edge of the groove opening 261a from forming a sharp corner to scratch the snap ring 25 when the restricting collar 26 and the snap ring 25 are assembled.

In an embodiment, a restricting step 216 can be formed on the outer surface of the screw rod 21, and the restricting step 216 and the mating groove 212 can be spaced from each other along the axis of the screw rod 21. One end of the elastic supporting member 27 can be connected to the restricting step 216, and the other end of the elastic supporting member 27 can be connected to the restricting collar 26.

The restricting step 216 can provide a supporting force for the elastic supporting member 27, so that the elastic supporting member 27 can be compressed, and the elastic supporting member 27 can apply an acting force directed to the groove opening 261a along the axis of the mounting column to the restricting collar 26.

In an embodiment, referring to FIG. 14, the bearing 401 is sleeved on the outer surface of the screw rod 21, and the bearing 401 can form a restricting step 216 to provide support for the elastic supporting member 27.

The present application includes the following advantages. The accommodating slot 311 can be provided in the main core body 31, the elastic member 33 can be disposed in the accommodating slot 311, the nut 22 can extend into the accommodating slot 311 and can be pressed against the elastic member 33, so that the nut 22 can push the main core body 31 to move towards the valve port 12 via the elastic member 33. In addition, when the main core body 31 abuts against the valve port 12, the nut 22 can further press the elastic member 33, so that the elastic member 33 can apply sufficient elastic force to the main core body 31 to press the main core body 31, which can be beneficial to more firmly block the valve port 12 to avoid leakage in the valve port 12.

When the lower end surface 37 blocks the valve port 12, the pressure at the outlet pipe 50 can be lower than the pressure in the valve cavity 11. By providing the first channel 301, the outlet pipe 50 can be in communication with the upper cavity 111, so that the pressure applied to the lower end surface 37 is consistent with the pressure applied to the upper end surface 36, thereby facilitating the transmission assembly 20 to drive the main core body 31 to open the valve port 12.

Since the arc-shaped surface 223 is in contact with the centering surface 160a, the fitting degree can be higher, so that the nut 22 would not be prone to eccentricity. That is, it is beneficial to center the nut 22 to improve the coaxiality between the nut 22 and the fixed seat assembly 10, thereby avoiding the increase of the friction force when the nut 22 is in threaded fit with the screw rod 21 due to the eccentricity of the nut 22.

Since the inner ring of the bearing 401 is in clearance fit with the screw rod 21 or the outer ring of the bearing 401 is in clearance fit with the inner surface of the assembling hole 19, an accommodating space can be formed on at least one of the inner surface or the outer surface of the bearing 401, so that the bearing 401 can be prevented from being deformed due to the screw rod 21 and the assembling hole 19 clamping the bearing 401 too tightly.

Since the snap ring 25 can be at least partially accommodated in the mating groove 212, and the other part of the snap ring 25 can be received in the assembling groove 261, the restricting collar 26 can push the snap ring 25 to abut against the edge of the mating groove 212 adjacent to the groove opening 261a via the inner surface of the assembling groove 261 when the end of the restricting collar 26 away from the assembling groove 261 is subjected to a force towards the groove opening 261a along the axis of the screw rod 21. Thus, the snap ring 25 can be limited between the screw rod 21 and the restricting collar 26 along the axis of the screw rod 21. Furthermore, because the diameter D of the snap ring 25 is greater than the width L of the assembling gap, the snap ring 25 would not separate from the mating groove 212 along the assembling gap 262 even if the snap ring 25 rolls, so that the assembly of the snap ring 25 is more stable.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present application.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the patent protection of the present application shall be defined by the appended claims.

## Claims

1. An electronic expansion valve, **characterized by** comprising
a fixed seat assembly comprising a valve cavity and a valve port;
a transmission assembly comprising a screw rod and a nut, wherein the screw rod is restricted by the fixed seat assembly and fits with the fixed seat assembly along an axis of the screw rod, the screw rod is configured to rotate along the axis of the screw rod; and
the nut is sleeved around the screw rod, the nut is in threaded connection with the screw rod, and an outer surface of the nut is restricted by the fixed seat assembly and fits with the fixed seat assembly along a circumference of the nut;
a valve core assembly, wherein the valve core assembly is disposed in the valve cavity, the valve core assembly comprises a main core body and an elastic member, the main core body is provided with an accommodating slot, the elastic member is disposed in the accommodating slot, and the nut extends into the accommodating slot and is pressed against the elastic member; and
the nut is configured to compress the elastic member to push the main core body toward the valve port, causing the main core body to seal the valve port.

2. The electronic expansion valve of claim 1, wherein the valve core assembly further comprises a pressing block, an opening of the accommodating slot is provided at a side of the accommodating slot away from the valve port, the pressing block is located in the accommodating slot, and the pressing block is fixed to the opening of the accommodating slot; and
the nut comprises a restricting protrusion, the restricting protrusion is provided at an end of the nut adjacent to the valve port, an end of the restricting protrusion is configured to press against the elastic member, and another end of the restricting protrusion is configured to abut against the pressing block.

3. The electronic expansion valve of claim 2, wherein the valve core assembly further comprises a transmission block, the transmission block is restricted between the restricting protrusion and the elastic member.

4. The electronic expansion valve of claim 3, wherein the accommodating slot comprises a stopping surface, the stopping surface is provided away from the valve port, the elastic member is located at a side of the stopping surface adjacent to the valve port, at least a part of the elastic member extends out from the stopping surface, and an assembling gap is defined between the transmission block a the stopping surface.

5. The electronic expansion valve of claim 1, wherein the fixed seat assembly comprises a connection sleeve and a guide sleeve, the guide sleeve is sleeved outside the connection sleeve and is connected to the guide sleeve by welding, the guide sleeve is provided adjacent to the valve port relative to the connection sleeve, the screw rod is restricted by an inner surface of the connection sleeve and fits with the inner surface of the connection sleeve along the axis of the screw rod, and the outer surface of the nut is restricted by the inner surface of the connection sleeve and fits with the inner surface of the connection sleeve along the circumference of the nut.

6. The electronic expansion valve of claim 5, wherein an inner surface of the guide sleeve comprises a restricting surface, when the main core body moves towards a direction away from the valve port, the restricting surface is configured to restrict the main core body; and the main core body is provided with a restricting collar, the restricting collar is provided adjacent to the restricting surface, the restricting collar is configured to abut against the restricting surface, a thickness of the restricting collar is defined as h, and the thickness h of the restricting collar is smaller than or equal to 1.5 mm.

7. The electronic expansion valve of claim 1, wherein the fixed seat assembly comprises a connection sleeve and a guide sleeve, the connection sleeve and the guide sleeve are sleeved together and connected with each other, and the valve cavity is provided in the guide sleeve; the connection sleeve comprises a first wall, the first wall is in contact with the guide sleeve, and a welding seam is defined between the first wall and the guide sleeve;
at an end of the first wall away from the valve port, a welding groove is defined between the connection sleeve and the guide sleeve, and the welding groove is in communication with the welding seam; and
at an end of the first wall adjacent to the valve port, a second channel is defined between the connection sleeve and the guide sleeve, and the second channel is configured to communicate the valve cavity with the welding seam.

8. The electronic expansion valve of claim 7, wherein the fixed seat assembly further comprises a valve seat and an inlet pipe, the valve seat is sleeved outside the guide sleeve, the valve cavity is enclosed between the valve seat and the guide sleeve, and the inlet pipe inserts in a sidewall of the valve seat and is in communication with the valve cavity;
the guide sleeve comprises a guiding section and a connecting section, the guiding section is provided adjacent to the connection sleeve relative to the connecting section, the guiding section is in clearance fit with an inner surface of the valve seat, along a direction from the connection sleeve to the valve cavity, an outer size of the guiding section increases, and the connecting section is in interference fit with the inner surface of the valve seat; and
wherein the inlet pipe, the valve seat, the connection sleeve and the guide sleeve are integrally connected together by furnace welding.

9. The electronic expansion valve of claim 1, wherein the transmission assembly further comprises a rotor and a connecting plate, the connecting plate is fixed to the rotor, the connecting plate is provided with a mounting hole, the screw rod extends in the mounting hole, and the screw rod is in interference fit with an inner surface of the mounting hole; and
the rotor is configured to drive the screw rod to rotate via the connecting plate.

10. The electronic expansion valve of claim 1, wherein an outer surface of the main core body is in sealing fit with an inner surface of the valve cavity, and the outer surface of the main core body is movable relative to the inner surface of the valve cavity, the main core body is configured to separate the valve cavity into an upper cavity and a lower cavity, the lower cavity is configured to communicate the inlet pipe and the valve port, the main core body comprises an upper end surface and a lower end surface, the upper end surface faces the upper cavity, and the lower end surface faces the valve port, and the main core body comprises a first channel extending through the upper end surface and the lower end surface; and the lower end surface is configured to block the valve port, and when the lower end surface blocks the valve port, the valve port is in communication with the upper cavity via the first channel.

11. The electronic expansion valve of claim 10, wherein an annular-shaped mounting site is provided in the first channel, an end of the transmission assembly is provided with a restricting protrusion, the restricting protrusion is disposed in the annular-shaped mounting site, two ends of the restricting protrusion abuts against two opposite sidewalls of the annular-shaped mounting site along an axis of the restricting protrusion, respectively, a connection channel is defined between an outer surface of the restricting protrusion and an inner surface of the annular-shaped mounting site, and the connection channel is in communication with the first channel.

12. The electronic expansion valve of claim 11, wherein the outer surface of the restricting protrusion is provided with a notch, the notch extends through the two ends of the restricting protrusion along the axis of the restricting protrusion, and the connection channel is enclosed between the notch and the inner surface of the annular-shaped mounting site; and
the notch and an upper edge of the annular-shaped mounting site are staggered along a radial direction of the annular-shaped mounting site, the notch and a lower edge of the annular-shaped mounting site are staggered along a radial direction of the annular-shaped mounting site, so that the connection channel is in communication with the first channel.

13. The electronic expansion valve of claim 12, further comprising a pressing block and a transmission block, wherein the pressing block and the transmission block are connected to an inner surface of the first channel, respectively, the pressing block and the transmission block are spaced from each other along the axis of the first channel, so that the transmission block, the inner surface of the first channel and the pressing block enclose to form the annular-shaped mounting site; and
the pressing block is provided adjacent to the upper end surface, a flow gap is defined between an inner surface of the pressing block and an outer surface of the transmission assembly, and the lower end surface is in fluid communication with the upper end surface via the first channel, the connection channel and the flow gap.

14. The electronic expansion valve of claim 13, further comprising an outer housing, wherein the outer housing is covered on a side of the fixed seat assembly away from the valve port, a rotor cavity is enclosed between the outer housing and the fixed seat assembly, a sidewall of the fixed seat assembly is provided with a through hole, and the through hole is configured to communicate the upper cavity with the rotor cavity.

15. The electronic expansion valve of claim 14, wherein the fixed seat assembly comprises a connection sleeve and a guide sleeve, the connection sleeve is configured to dispose the transmission assembly, the valve cavity is provided in the guide sleeve, and the through hole is provided on the guide sleeve; and
the connection sleeve comprises a first wall and a second wall, the first wall is connected to the guide sleeve by welding, and the second channel is spaced from the guide sleeve, a second channel is defined and located between the second wall and the guide sleeve, and the second channel is configured to communicate the upper cavity with the through hole.

16. The electronic expansion valve of claim 1, wherein an outer surface of the nut comprises an arc-shaped surface and a protrusion portion, the protrusion portion protrudes from the arc-shaped surface along a radial direction of the arc-shaped surface;
the fixed seat assembly comprises a mounting channel, an inner surface of the mounting channel comprises a centering surface and a restricting surface, the centering surface is in contact with the arc-shaped surface, and the restricting surface is in contact with the protrusion portion; and
the nut is configured to move relative to the fixed seat assembly along an axis of the nut, and the restricting surface is configured to fit with the protrusion portion, so as to restrict rotation of the nut along a circumference of the nut.

17. The electronic expansion valve of claim 16, wherein a shape of the inner surface of the mounting channel is the same as a shape of the outer surface of the nut, and the outer surface of the nut is in contact with the inner surface of the mounting channel.

18. The electronic expansion valve of claim 16, wherein the outer surface of the nut comprises a plurality of protrusion portions, the plurality of protrusion portions are spaced from each other along a circumference of the nut.

19. The restricting structure for the electronic expansion valve of claim 16, wherein the protrusion portion is configured as strip-shaped, and the protrusion portion extends along the axis of the nut; and
along a direction from the axis of the nut to the arc-shaped surface, a width of a cross-section of the protrusion portion decreases.

20. The electronic expansion valve of claim 16, wherein the connection sleeve comprises a restricting section and an accommodating section, an inner diameter of the restricting section is smaller than an inner diameter of the accommodating section, the outer surface of the nut is in contact with an inner surface of the restricting section, the nut is configured to slide along the inner surface of the restricting section, and an outer surface of the nut is spaced from an inner surface of the accommodating section; and
the restricting section is provided with a recessed portion, the recessed portion is provided at an end of the restricting section along an axis of the restricting section, and the recessed portion is configured to flare outwardly relative to the axis of the restricting section.

21. The electronic expansion valve of claim 1, further comprising a bearing, wherein the fixed seat assembly is provided with an assembling hole, the bearing is disposed in the assembling hole, and the screw rod extends through the bearing; and
an inner ring of the bearing is in clearance fit with the screw rod; optionally,
an outer ring of the bearing is clearance fit with an inner surface of the assembling hole; optionally,
the inner ring of the bearing is in clearance fit with the screw rod, and the outer ring of the bearing is clearance fit with the inner surface of the assembling hole.

22. The electronic expansion valve of claim 21, wherein a first restricting step and a second restricting step are defined on an outer surface of the screw rod, the first restricting step and the second restricting step are spaced from each other along the axis of the screw rod,
the first restricting step is configured to restrict an end of the bearing, the second restricting step is configured to restrict another end of the bearing, and
at least one of the first restricting step and the second restricting step is detachably connected to the screw rod.

23. The electronic expansion valve of claim 22, further comprising an elastic supporting member, wherein an end of the elastic supporting member is connected to the first restricting step, and another end of the elastic supporting member is connected to a side of the bearing away from the second restricting step.

24. The electronic expansion valve of claim 22, wherein a mounting groove is defined in the assembling hole, the bearing is disposed in the mounting groove, an end of the bearing along an axis of the bearing abuts against a side of the mounting groove, and another end of the bearing along the axis of the bearing abuts against another side of the mounting groove.

25. The electronic expansion valve of claim 21, wherein the screw rod is fixed to the inner ring of the bearing, and the outer ring of the bearing is in clearance fit with the inner surface of the assembling hole.

26. The electronic expansion valve of claim 1, further comprising a restricting collar and a snap ring, wherein an outer surface of the screw rod is provided with a mating groove, the restricting collar is sleeved outside the screw rod, the restricting collar is provided with an assembling groove corresponding to the mating groove, the assembling groove comprises a groove opening, an assembling gap is formed between the groove opening and the screw rod, at least a part of the snap ring is accommodated in the mating groove, and another part of the snap ring is accommodated in the assembling groove; and when an end of the restricting collar away from the assembling groove suffers from a force from the axis of the screw rod to the groove opening, an inner surface of the assembling groove cooperates with an inner surface of the mating groove to snap the snap ring; and a width of the assembling gap is defined as *L*, and a size of the snap ring is defined as *D*, and the size *D* of the snap ring is greater than the width *L* of the assembling gap.

27. The electronic expansion valve of claim 26, wherein an outer surface of the screw rod is provided with a guiding inclined surface, the guiding inclined surface is provided at a side of the mating groove, and along a direction from the guiding inclined surface to the mating groove, a distance between the guiding inclined surface and the axis of the screw rod increases.

28. The electronic expansion valve of claim 27, wherein the assembling groove is provided with an abutting inclined surface, the abutting inclined surface is configured to abut against the snap ring; and
the abutting inclined surface faces the groove opening, and along a direction from a bottom of the assembling groove to the groove opening, a distance between the abutting inclined surface and an axis of the restricting collar increases.
